# EUROPÄISCHE PATENTSCHRIFT

(11) **EP 2 936 925 B1**
(45) Veröffentlichungstag und Bekanntmachung des Hinweises auf die Patenterteilung: **05.05.2021**
(21) Anmeldenummer: 13786502.8
(22) Anmeldetag: 07.11.2013
(51) Int. Cl.: H05B 3/84

(54) **SCHEIBE MIT ELEKTRISCHER HEIZSCHICHT**
GLASSPANE WITH ELECTRICAL HEATING LAYER
VITRE AVEC COUCHE CHAUFFANTE ÉLECTRIQUE

(30) Priorität: 20.12.2012 EP 12198362
(43) Veröffentlichungstag der Anmeldung: 28.10.2015
(73) Patentinhaber: SAINT-GOBAIN GLASS FRANCE, 92400 Courbevoie (FR)
(72) Erfinder: PHAN, Dang Cuong, 52062 Aachen (DE); DIMITRIJEVIC, Bojan, 44803 Bochum (DE); SCHALL, Günther, 52372 Kreuzau (DE)
(74) Vertreter: Gebauer, Dieter Edmund
(86) Internationale Anmeldenummer: PCT/EP2013/073219
(87) Internationale Veröffentlichungsnummer: WO 2014/095152

(56) Entgegenhaltungen:
- EP-A2- 1 168 888
- WO-A2-03/015473
- WO-A2-03/024155
- DE-A1- 3 644 297
- GB-A- 2 381 179
- US-A1- 2004 065 651
- US-A1- 2004 200 821

## Beschreibung

Die Erfindung betrifft eine Scheibe mit elektrischer Heizschicht, ein Verfahren zu deren Herstellung und deren Verwendung.

Das Sichtfeld einer Fahrzeugscheibe, insbesondere einer Windschutzscheibe muss frei von Eis und Beschlag gehalten werden. Bei Kraftfahrzeugen mit Verbrennungsmotor kann beispielsweise ein mittels Motorwärme erwärmter Luftstrom auf die Scheiben gelenkt werden.

Alternativ kann die Scheibe eine elektrische Heizfunktion aufweisen. So sind Verbundscheiben bekannt, die auf einer innenseitigen Oberfläche einer der Einzelscheiben eine transparente, elektrisch leitfähige Beschichtung aufweisen. Durch eine externe Spannungsquelle kann ein elektrischer Strom durch die elektrisch leitfähige Beschichtung geleitet werden, der die Beschichtung und damit die Scheibe erwärmt. WO2012/052315 A1 offenbart beispielsweise eine solche beheizbare, elektrisch leitfähige Beschichtung auf Metallbasis.

Die elektrische Kontaktierung der elektrischen Heizschicht erfolgt typischerweise über Sammelleiter, wie aus US 2007/0020465 A1 bekannt ist. Die Sammelleiter bestehen beispielsweise aus einer aufgedruckten und eingebrannten Silberpaste. Die Sammelleiter verlaufen typischerweise entlang der oberen und unteren Kante der Scheibe. Die Sammelleiter sammeln den Strom, der durch die elektrisch leitfähige Beschichtung fließt und leiten ihn zu externen Zuleitungen, die mit einer Spannungsquelle verbunden sind.

Aus der industriellen Serienfertigung von Scheiben mit elektrischen Heizschichten ist die Strukturierung der elektrischen Heizschicht durch Trennlinien oder Trennzonen zur Formung eines in der Regel gewundenen Strompfads bekannt. Dies hat den Vorteil, dass der elektrische Widerstand erhöht und der Strompfad durch relativ kleine Anschlusselektroden kontaktiert werden kann. In der Patentliteratur ist ein solcher Flächenheizkörper beispielsweise in der deutschen Offenlegungsschrift DE 19860870 A1 beschrieben.

Scheiben mit einer elektrischen Heizschicht schirmen elektromagnetische Strahlung relativ stark ab, so dass insbesondere in Kraftfahrzeugen mit einer heizbaren Windschutzscheibe der Funkdatenverkehr erheblich beeinträchtigt sein kann. Heizbare Windschutzscheiben werden deshalb häufig mit unbeschichteten und damit beschichtungsfreien Zonen ("Kommunikationsfenster") versehen. Die unbeschichteten Zonen sind zumindest für bestimmte Bereiche des elektromagnetischen Spektrums gut durchlässig und ermöglichen auf diese Weise einen reibungslosen Datenverkehr durch die Scheibe. Die unbeschichteten Zonen, an denen sich oft elektronische Einrichtungen, wie Sensoren, Kameras und dergleichen befinden, sind oft in der Nähe des oberen Scheibenrands angeordnet, wo sie vom oberen Maskierungsstreifen gut verdeckt werden können.

Jedoch beeinträchtigen unbeschichtete Zonen die elektrischen Eigenschaften der Heizschicht, was sich zumindest lokal auf die Stromdichteverteilung des durch die Heizschicht fließenden Heizstroms auswirkt. Tatsächlich verursachen sie eine stark inhomogene Heizleistungsverteilung, wobei die Heizleistung unterhalb und in der Umgebung der unbeschichteten Zonen deutlich verringert ist. Andererseits treten Stellen mit einer besonders hohen Stromdichte auf, in denen die Heizleistung stark erhöht ist. In der Folge können sehr hohe lokale Scheibentemperaturen auftreten, welche eine Gefahr für Verbrennungen darstellen und den Scheiben große thermische Spannungen auferlegen. Zudem können sich dadurch Klebstellen von Anbauteilen lösen.

Die Patentanmeldung US 2004/065651 A1 zeigt eine Scheibe mit einem Kommunikationsfenster, der durch Trennlinien eine Mehrzahl von Segmenten in einer Heizschicht ausgebildet ist. Die Segmente sind um das Kommunikationsfenster geführt und haben im Bereich des Kommunikationsfensters eine voneinander verschiedene Breite, um einen verschiedenen elektrischen Widerstand der Strompfade in den Segmenten zu erreichen. WO 03/024155 A2 offenbart eine Scheibe mit einem oberen Sammelleiter und einem unteren Sammelleiter. Im Bereich einer Ausnehmung der Beschichtung befindet sich ein weiterer Sammelleiter, der mit einer anderen Spannung beaufschlagt ist wie der obere Sammelleiter.

Die Aufgabe der vorliegenden Erfindung besteht darin, eine verbesserte Scheibe mit elektrischer Heizschicht sowie unbeschichteter Zone und zumindest annähernd gleichmäßiger Heizleistungsverteilung bereitzustellen, die einfach und kostengünstig herzustellen ist.

Die Aufgabe der vorliegenden Erfindung wird erfindungsgemäß durch eine Scheibe mit elektrischer Heizschicht gemäß Anspruch 1 gelöst. Bevorzugte Ausführungen gehen aus den Unteransprüchen hervor.

Die erfindungsgemäße Scheibe mit elektrischer Heizschicht umfasst zumindest die folgenden Merkmale:
- eine erste Scheibe mit einer Oberfläche,
- mindestens eine elektrische Heizschicht aus einer elektrisch leitfähigen Beschichtung zum Heizen der ersten Scheibe, die auf mindestens einem Teil der Oberfläche angeordnet ist und mindestens eine unbeschichtete Zone umfasst,

- mindestens zwei zum Anschluss an eine Spannungsquelle vorgesehene Sammelleiter, die mit der elektrischen Heizschicht so verbunden sind, dass zwischen den Sammelleitern ein Strompfad für einen Heizstrom geformt ist und
- mindestens eine Trennlinie, die die elektrische Heizschicht in mindestens zwei Segmente elektrisch unterteilt,
wobei mindestens ein Segment und insbesondere das zur unbeschichteten Zone unmittelbar benachbarte Segment, zumindest teilweise streifenförmig um die unbeschichtete Zone angeordnet ist, so dass der Strompfad für den Heizstrom zumindest teilweise um die unbeschichtete Zone geführt ist.

Der Strompfad wird dabei insbesondere in die Bereiche oberhalb und/oder unterhalb der unbeschichteten Zone geführt, wobei oberhalb und unterhalb jeweils auf die Richtung des Strompfads, also der kürzesten Verbindung zwischen den Sammelleitern bezogen ist.

Die elektrische Heizschicht umfasst mindestens eine unbeschichtete Zone. Dies bedeutet, dass die unbeschichtete Zone vollständig oder teilweise von der elektrischen Heizschicht umgeben ist. Die unbeschichtete Zone kann insbesondere an einen Randbereich der elektrischen Heizschicht grenzen oder über einen unbeschichteten Streifen zum Randbereich der elektrischen Heizschicht hin erweitert sein.

Scheiben mit elektrischer Heizschicht und unbeschichteter Zone nach dem Stand der Technik ohne Trennlinien haben in der Regel eine sehr inhomogene Heizleistungsverteilung. Sie weisen bei Beheizung besonders in Bereichen oberhalb und/oder unterhalb der unbeschichteten Zone Bereiche mit niedriger Temperatur auf.

Die Erfindung beruht auf der Erkenntnis, dass durch Trennlinien eine Optimierung des Strompfades erzielt werden kann. Durch die Ausbildung von mindestens einem erfindungsgemäßen Segment, das streifenförmig um einen Teil der unbeschichteten Zone herum angeordnet ist, kann der Strompfad in die Bereiche mit niedrigerer Temperatur geführt werden. Dies führt zu einer homogeneren Heizleistungsverteilung und Temperaturverteilung.

Die Erfindung ist umso wirksamer, je größer die unbeschichtete Zone ist und desto mehr erfindungsgemäße Segmente durch Trennlinien ausgebildet werden. In einer vorteilhaften Ausgestaltung weist die elektrische Heizschicht mindestens zwei Trennlinien und bevorzugt 4 bis 30 Trennlinien auf, die Segmente ausbilden, die zumindest teilweise streifenförmig um die unbeschichtete Zone herum angeordnet sind. Wie Untersuchungen der Erfinder ergaben, genügen etwa 10 Trennlinien, die zu beiden Seiten einer beispielsweise mittig innerhalb einer elektrischen Heizschicht angeordneten unbeschichteten Zone verlaufen, um ausreichende Homogenisierung der Heizleistungsverteilung zu erzielen. Gleichzeitig bleibt der Strukturierungsaufwand zur Einbringung der Trennlinien zeitlich und finanziell wirtschaftlich akzeptabel.

Gleichzeitig müssen die Trennlinien besonders dünn ausgebildet sein, um die Durchsicht der Scheibe möglichst wenig zu beeinträchtigen. In einer weiteren vorteilhaften Ausgestaltung der erfindungsgemäßen Scheibe beträgt Breite d der Trennlinie von 30 µm bis 200 µm und bevorzugt von 70 µm bis 140 µm. Dies hat den besonderen Vorteil, dass Trennlinien mit einer derart geringen Breite die Durchsicht durch die Scheibe nicht oder nur sehr geringfügig beeinträchtigen.

In einer weiteren vorteilhaften Ausgestaltung der erfindungsgemäßen Scheibe beträgt die Breite des Segments zwischen unbeschichteter Zone und nächstliegender Trennlinie und/oder zwischen zwei benachbarten Trennlinien von 1 cm bis 15 cm. Dadurch lässt sich eine besonders vorteilhafte Verbesserung der Homogenität der Heizleistungsverteilung der elektrischen Heizschicht erzielen.

In einer weiteren vorteilhaften Ausgestaltung der erfindungsgemäßen Scheibe beträgt die Fläche der unbeschichteten Zone von 0,5 dm² bis 15 dm² und bevorzugt von 2 dm² bis 8 dm². Scheiben nach dem Stand der Technik ohne erfindungsgemäße Trennlinien und mit unbeschichteten Zonen in dieser Größenordnung zeigen besonders inhomogene Heizleistungverteilungen und sind bei schlechten Witterungsverhältnissen nur unzureichend von Eis, Schnee und Beschlag zu befreien. Durch den Einsatz von erfindungsgemäßen Trennlinien lässt sich bei derart großen unbeschichteten Zonen eine besonders hohe und vorteilhafte Verbesserung der Heizeigenschaften der Scheibe erzielen.

In einer weiteren vorteilhaften Ausgestaltung der erfindungsgemäßen Scheibe weicht die mittleren Länge jedes der Segmente um weniger als 25 %, bevorzugt von 0 % bis 10 % und besonders bevorzugt von 0 % bis 5 % vom Mittelwert der mittleren Längen ab. Die mittlere Länge eines Segments beschreibt die gemittelte Länge des Segments in Richtung des Strompfads, der bei Anlegen einer Spannung durch das Segment fließt. Der Mittelwert der mittleren Länge ergibt sich durch die Summierung aller mittleren Längen und anschließender Division durch die Anzahl der Segmente.

In einer besonders vorteilhaften Ausgestaltung weisen alle mittleren Längen der Segmente in etwa die gleiche Länge auf. Da die mittlere Länge auch von der Krümmung des Segments abhängt, kann es zur Erzielung von verbesserten Heizeigenschaften vorteilhaft sein, den Strompfad durch das Segment durch weitere Sammelleiter oder niederohmige Brücken zu verkürzen.

Bei der erfindungsgemäßen Scheibe ist ein dritter Sammelleiter in elektrischem Kontakt zum ersten Sammelleiter oder zweiten Sammelleiter angeordnet, der die Länge des Strompfads in mindestens einem Segment, bevorzugt in allen Segmenten im Vergleich zum Strompfad außerhalb der Segmente und Trennlinien verkürzt. Dazu kann ein dritter Sammelleiter mehrere oder alle Segment kontaktieren. Durch den dritten Sammelleiter wird beispielsweise die mittlere Länge des jeweiligen Segments verkürzt.

Alternativ kann jedes Segment einen eigenen weiteren Sammelleiter aufweisen. Der Widerstand des weiteren Sammelleiters kann durch Breite, Dicke und Form derart angepasst werden, dass jedes Segment mit einer definierten Spannung beaufschlagt werden kann und sich dadurch eine besonders günstige Heizleistungsverteilung ergibt.

Die Breite des ersten und zweiten Sammelleiters beträgt bevorzugt von 2 mm bis 30 mm, besonders bevorzugt von 4 mm bis 20 mm und insbesondere von 10 mm bis 20 mm. Dünnere Sammelleiter führen zu einem zu hohen elektrischen Widerstand und damit zu einer zu hohen Erwärmung des Sammelleiters im Betrieb. Des Weiteren sind dünnere Sammelleiter nur schwer durch Drucktechniken wie Siebdruck herzustellen. Dickere Sammelleiter erfordern einen unerwünscht hohen Materialeinsatz. Des Weiteren führen sie zu einer zu großen und unästhetischen Einschränkung des Durchsichtbereichs der Scheibe. Die Länge des Sammelleiters richtet sich nach der Ausdehnung der elektrischen Heizschicht. Bei einem Sammelleiter, der typischerweise in Form eines Streifens ausgebildet ist, wird die längere seiner Dimensionen als Länge und die weniger lange seiner Dimensionen als Breite bezeichnet. Die dritten oder zusätzlichen Sammelleiter können auch dünner ausgestaltet sein, bevorzugt von 0,6 mm bis 5 mm.

Der erste und der zweite Sammelleiter sind bevorzugt entlang einer Seitenkante auf der elektrisch leitfähigen Beschichtung angeordnet und verlaufen insbesondere näherungsweise parallel zueinander. Die Länge des Sammelleiters ist typischerweise im Wesentlichen gleich der Länge der Seitenkante der elektrischen Heizschicht, kann aber auch leicht größer oder kleiner sein. Es können auch mehr als zwei Sammelleiter auf der elektrisch leitfähigen Beschichtung angeordnet sein, bevorzugt im Randbereich entlang zweier gegenüberliegenden Seitenkanten der elektrischen Heizschicht. Es können auch mehr als zwei Sammelleiter auf der elektrischen Heizschicht angeordnet sein, beispielsweise um zwei oder mehrere unabhängige Heizfelder.

In einer vorteilhaften Ausgestaltung ist der erfindungsgemäße Sammelleiter als aufgedruckte und eingebrannte leitfähige Struktur ausgebildet. Der aufgedruckte Sammelleiter enthält bevorzugt zumindest ein Metall, eine Metalllegierung, eine Metallverbindung und/oder Kohlenstoff, besonders bevorzugt ein Edelmetall und insbesondere Silber. Die Druckpaste enthält bevorzugt metallische Partikel Metallpartikel und/oder Kohlenstoff und insbesondere Edelmetallpartikel wie Silberpartikel. Die elektrische Leitfähigkeit wird bevorzugt durch die elektrisch leitenden Partikel erzielt. Die Partikel können sich in einer organischen und/oder anorganischen Matrix wie Pasten oder Tinten befinden, bevorzugt als Druckpaste mit Glasfritten.

Die Schichtdicke des aufgedruckten Sammelleiters beträgt bevorzugt von 5 µm bis 40 µm, besonders bevorzugt von 8 µm bis 20 µm und ganz besonders bevorzugt von 8 µm bis 12 µm. Aufgedruckte Sammelleiter mit diesen Dicken sind technisch einfach zu realisieren und weisen eine vorteilhafte Stromtragfähigkeit auf.

Der spezifische Widerstand ρₐ der Sammelleiter beträgt bevorzugt von 0.8 µOhm•cm bis 7.0 µOhm•cm und besonders bevorzugt von 1.0 µOhm•cm bis 2.5 µOhm•cm. Sammelleiter mit spezifischen Widerständen in diesem Bereich sind technisch einfach zu realisieren und weisen eine vorteilhafte Stromtragfähigkeit auf.

Alternativ kann der Sammelleiter aber auch als Streifen einer elektrisch leitfähigen Folie ausgebildet sein. Der Sammelleiter enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lotmasse, über einen elektrisch leitfähigen Kleber oder durch direktes Auflegen elektrisch leitend verbunden sein.

In einer weiteren vorteilhaften Ausgestaltung der erfindungsgemäßen Scheibe ist in mindestens einem Segment der elektrische Widerstand entlang des Strompfades durch eine niederohmige Brücke erniedrigt. Die niederohmige Brücke weist dabei einen geringeren Flächenwiderstand auf, als das Material der elektrischen Heizschicht. Die niederohmige Brücke besteht bevorzugt aus dem Material des Sammelleiters und wird bevorzugt ebenfalls aufgedruckt. Die niederohmige Brücke ist dabei nicht notwendigerweise mit einem der Sammelleiter unmittelbar elektrisch verbunden, sondern kann lediglich über die elektrische Heizschicht mit den Sammelleitern verbunden sein. Durch die niederohmigen Brücken kann der Strompfad und der Spannungsabfall innerhalb eines Segmentes derart gesteuert werden, dass die Heizeigenschaften der Scheibe besonders verbessert werden.

Die erfindungsgemäße Scheibe umfasst eine erste Scheibe, auf der eine elektrische Heizschicht angeordnet ist. Je nach Material der elektrischen Heizschicht kann es vorteilhaft sein, die Heizschicht mit einer Schutzschicht, beispielsweise einem Lack, einer Polymerfolie und/oder einer zweiten Scheibe zu schützen.

In einer vorteilhaften Ausgestaltung der erfindungsgemäßen Scheibe ist die Oberfläche der ersten Scheibe, auf der die elektrische Heizschicht angeordnet ist, über eine thermoplastische Zwischenschicht mit einer zweiten Scheibe flächig verbunden ist

Als erste und gegebenenfalls zweite Scheibe sind im Grunde alle elektrisch isolierenden Substrate geeignet, die unter den Bedingungen der Herstellung und der Verwendung der erfindungsgemäßen Scheibe thermisch und chemisch stabil sowie dimensionsstabil sind.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste Scheibe und/oder die zweite Scheibe sind bevorzugt transparent, insbesondere für die Verwendung der Scheibe als Windschutzscheide oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Die Dicke der Scheibe kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Die erste Scheibe und gegebenenfalls die zweite Scheibe weisen beispielsweise im Fahrzeugbau und Architekturbereich übliche Flächen von 200 cm² bis zu 20 m² auf.

Die Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Mehrere Scheiben werden durch mindestens eine Zwischenschicht miteinander verbunden. Die Zwischenschicht enthält vorzugsweise mindestens einen thermoplastischen Kunststoff, bevorzugt Polyvinylbutyral (PVB), Ethylenvinylacetat (EVA) und/oder Polyethylenterephthalat (PET). Die thermoplastische Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Die thermoplastische Zwischenschicht kann durch eine oder auch durch mehrere übereinander angeordnete thermoplastische Folien ausgebildet werden, wobei die Dicke einer thermoplastischen Folie bevorzugt von 0,25 mm bis 1 mm beträgt, typischerweise 0,38 mm oder 0,76 mm.

Bei einer erfindungsgemäßen Verbundscheibe aus einer ersten Scheibe, einer Zwischenschicht und einer zweiten Scheibe kann die elektrische Heizschicht direkt auf der erste Scheibe aufgebracht sein oder auf eine Trägerfolie oder auf die Zwischenschicht selbst aufgebracht sein. Die erste Scheibe und die zweite Scheibe weisen jeweils eine innenseitige Oberfläche und eine außenseitige Oberfläche auf. Die innenseitigen Oberflächen der ersten und der zweiten Scheibe sind einander zugewandt und über die thermoplastische Zwischenschicht miteinander verbunden. Die außenseitigen Oberflächen der ersten und der zweiten Scheibe sind voneinander und von der thermoplastischen Zwischenschicht abgewandt. Die elektrisch leitfähige Beschichtung ist auf der innenseitigen Oberfläche der ersten Scheibe aufgebracht. Natürlich kann auch auf der innenseitigen Oberfläche der zweiten Scheibe eine weitere elektrisch leitfähige Beschichtung aufgebracht sein. Auch die außenseitigen Oberflächen der Scheiben können Beschichtungen aufweisen. Die Begriffe "erste Scheibe" und "zweiten Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Scheibe beispielsweise dafür vorgesehen, in einer Öffnung, beispielsweise eines Fahrzeugs oder eines Gebäudes, den Innenraum gegenüber der äußeren Umgebung abzutrennen, so kann die ersten Scheibe dem Innenraum oder der äußeren Umgebung zugewandt sein.

Die elektrische Heizschicht enthält eine elektrisch leitfähige Beschichtung. Erfindungsgemäße elektrisch leitfähige Beschichtungen sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und/oder Chrom oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionellen Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten der beheizbaren Beschichtung zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Dielektrische Schichten können aber auch mehrere Einzelschichten umfassen, beispielsweise Einzelschichten eines dielektrischen Materials, Glättungsschichten, Anpassungsschichten, Blockerschichten und/oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden.

Weitere geeignete elektrisch leitfähigen Beschichtungen enthalten bevorzugt Indium-Zinnoxid (ITO), fluordotiertes Zinnoxid (SnO₂:F) oder aluminiumdotiertes Zinkoxid (ZnO:AI).

Die elektrische Heizschicht kann prinzipiell jede Beschichtung sein, die elektrisch kontaktiert werden soll. Soll die erfindungsgemäße Scheibe die Durchsicht ermöglichen, wie es beispielsweise bei Scheiben im Fensterbereich der Fall ist, so ist die elektrisch leitfähige Beschichtung bevorzugt transparent. Die erfindungsgemäße elektrisch leitfähige Beschichtung ist bevorzugt für elektromagnetische Strahlung transparent, besonders bevorzugt für elektromagnetische Strahlung einer Wellenlänge von 300 bis 1.300 nm und insbesondere für sichtbares Licht.

In einer vorteilhaften Ausgestaltung ist die elektrisch leitfähige Beschichtung eine Schicht oder ein Schichtaufbau mehrerer Einzelschichten mit einer Gesamtdicke von kleiner oder gleich 2 µm, besonders bevorzugt kleiner oder gleich 1 µm.

Eine vorteilhafte erfindungsgemäße elektrisch leitfähige Beschichtung weist einen Flächenwiderstand von 0,4 Ohm/Quadrat bis 10 Ohm/Quadrat auf. In einer besonders bevorzugten Ausgestaltung weist die erfindungsgemäße elektrisch leitfähige Beschichtung einen Flächenwiderstand von 0,5 Ohm/Quadrat bis 1 Ohm/Quadrat auf. Beschichtungen mit derartigen Flächenwiderständen eignen sich besonders zur Beheizung von Fahrzeugscheiben bei typischen Bordspannungen von 12 V bis 48 V oder bei Elektrofahrzeugen mit typischen Bordspannungen von bis zu 500 V.

Die elektrische Heizschicht kann sich über die gesamte Oberfläche der ersten Scheibe erstrecken. Die elektrische Heizschicht kann sich alternativ aber auch nur über einen Teil der Oberfläche der ersten Scheibe erstrecken. Die elektrische Heizschicht erstreckt sich bevorzugt über mindestens 50%, besonders bevorzugt über mindestens 70% und ganz besonders bevorzugt über mindestens 90% der innenseitigen Oberfläche der ersten Scheibe.

Die elektrische Heizschicht kann einen oder mehrere unbeschichtete Bereiche aufweisen. Diese Bereiche können eine besonders hohe Transmission für elektromagnetische Strahlung, beispielsweise Infrarot-Strahlung, oder Radarwellen aufweisen und sind beispielsweise als Datenübertragungsfenster oder Kommunikationsfenster bekannt.

In einer vorteilhaften Ausgestaltung einer erfindungsgemäßen Scheibe als Verbundscheibe weist die innenseitige Oberfläche der ersten Scheibe einen umlaufenden Randbereich mit einer Breite von 2 mm bis 50 mm, bevorzugt von 5 mm bis 20 mm auf, der nicht mit der elektrisch leitfähigen Beschichtung versehen ist. Die elektrisch leitfähige Beschichtung weist dann keinen Kontakt zur Atmosphäre auf und ist im Inneren der Scheibe durch die thermoplastische Zwischenschicht vorteilhaft vor Beschädigungen und Korrosion geschützt.

Die Sammelleiter werden durch eine oder mehrere Zuleitungen elektrisch kontaktiert. Die Zuleitung ist bevorzugt als flexibler Folienleiter (Flachleiter, Flachbandleiter) ausgebildet. Darunter wird ein elektrischer Leiter verstanden, dessen Breite deutlich größer ist als seine Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Folienleiter, die sich zur Kontaktierung von elektrisch leitfähigen Beschichtungen in Scheiben eignen, weisen lediglich eine Gesamtdicke von beispielsweise 0,3 mm auf. Derart dünne Folienleiter können ohne Schwierigkeiten zwischen den einzelnen Scheiben in der thermoplastischen Zwischenschicht eingebettet werden. In einem Folienleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

In einer vorteilhaften Ausgestaltung der Erfindung wird die elektrische Zuleitung mit einem Kontaktband verbunden, beispielsweise mittels einer Lotmasse oder eines elektrisch leitfähigen Klebstoffs. Das Kontaktband ist dann mit dem Sammelleiter verbunden. Das Kontaktband ist im Sinne der Erfindung eine Verlängerung der Zuleitung, so dass die Verbindungsfläche zwischen Kontaktband und Sammelleiter die erfindungsgemäße Kontaktfläche zu verstehen ist, ab der der Abstand a in Erstreckungsrichtung des Sammelleiters verläuft.

Das Kontaktband erhöht vorteilhaft die Stromtragfähigkeit des Sammelleiters. Außerdem kann durch das Kontaktband eine unerwünschte Erhitzung der Kontaktstelle zwischen Sammelleiter und Zuleitung verringert werden. Zudem vereinfacht das Kontaktband die elektrische Kontaktierung des Sammelleiters durch die elektrische Zuleitung, weil die Zuleitung nicht mit dem bereits aufgebrachten Sammelleiter verbunden, beispielsweise verlötet werden muss.

Das Kontaktband enthält bevorzugt zumindest ein Metall, besonders bevorzugt Kupfer, verzinntes Kupfer, Silber, Gold, Aluminium, Zink, Wolfram und/oder Zinn. Das ist besonders vorteilhaft im Hinblick auf die elektrische Leitfähigkeit des Kontaktbandes. Das Kontaktband kann auch Legierungen enthalten, welche bevorzugt eines oder mehrere der genannten Elemente und gegebenenfalls weitere Elemente enthält, beispielsweise Messing oder Bronze.

Das Kontaktband ist bevorzugt als Streifen einer dünnen, elektrisch leitfähigen Folie ausgebildet. Die Dicke des Kontaktbandes beträgt bevorzugt von 10 µm bis 500 µm, besonders bevorzugt von 15 µm bis 200 µm, ganz besonders bevorzugt von 50 µm bis 100 µm. Folien mit diesen Dicken sind technisch einfach herzustellen und leicht verfügbar und weisen zudem einen vorteilhaft geringen elektrischen Widerstand auf.

Die Länge des Kontaktbandes beträgt bevorzugt von 10 mm bis 400 mm, besonders bevorzugt von 10 mm bis 100 mm und insbesondere 20 mm bis 60 mm. Das ist besonders vorteilhaft im Hinblick auf eine gute Handhabbarkeit des Kontaktbandes sowie auf eine zur elektrischen Kontaktierung ausreichend große Kontaktfläche zwischen Sammelleiter und Kontaktband.

Die Breite des Kontaktbandes beträgt bevorzugt von 2 mm bis 40 mm, besonders bevorzugt von 5 mm bis 30 mm. Das ist besonders vorteilhaft im Hinblick auf die Kontaktfläche zwischen Kontaktband und Sammelleiter und eine einfache Verbindung des Kontaktbandes mit der elektrischen Zuleitung. Die Ausdrücke Länge und Breite des Kontaktbandes bezeichnen jeweils die Abmessung in der gleichen Ausbreitungsrichtung, durch die die Länge beziehungsweise Breite des Sammelleiters gegeben ist.

In einer bevorzugten Ausgestaltung steht das Kontaktband vollflächig mit der Sammelschiene in direktem Kontakt. Dazu wird ein Kontaktband auf den Sammelleiter aufgelegt. Der besondere Vorteil liegt in einer einfachen Herstellung der Scheibe und der Ausnutzung der gesamten Fläche des Kontaktbandes als Kontaktfläche.

Das Kontaktband kann einfach auf den Sammelleiter aufgelegt sein und wird innerhalb der laminierten Scheibe dauerhaft stabil an der vorgesehenen Position fixiert.

Die Erfindung umfasst weiter ein Verfahren zur Herstellung einer Scheibe mit elektrischer Heizschicht, mindestens umfassend:
(a) Aufbringen einer elektrischen Heizschicht mit einer unbeschichteten Zone auf eine Oberfläche einer ersten Scheibe,
(b) Aufbringen von mindestens zwei zum Anschluss an eine Spannungsquelle vorgesehene Sammelleiter, die mit der elektrischen Heizschicht so verbunden werden, dass zwischen den Sammelleitern ein Strompfad für einen Heizstrom geformt wird
(c) Einbringen mindestens einer Trennlinie, die die elektrische Heizschicht in mindestens zwei Segmente elektrisch unterteilt,
wobei mindestens ein Segment zumindest teilweise streifenförmig um die unbeschichtete Zone angeordnet wird, so dass der Strompfad für den Heizstrom zumindest teilweise um die unbeschichtete Zone geführt wird.

Das Aufbringen der elektrisch leitfähigen Beschichtung der elektrischen Heizschicht in Verfahrensschritt (a) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe. Die elektrisch leitfähige Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt (a) einer Temperaturbehandlung unterzogen werden. Dabei wird die erste Scheibe mit der elektrisch leitfähigen Beschichtung auf eine Temperatur von mindestens 200°C, bevorzugt mindestens 300 °C erwärmt. Die Temperaturbehandlung kann der Erhöhung der Transmission und/oder der Verringerung des Flächenwiderstands der elektrisch leitfähigen Beschichtung dienen.

Die erste Scheibe kann nach Verfahrensschritt (a) gebogen werden, typischerweise bei einer Temperatur von 500 °C bis 700 °C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt (a) gebogen werden, beispielsweise wenn die elektrisch leitfähige Beschichtung nicht dazu geeignet ist, einen Biegeprozess ohne Beschädigungen zu überstehen.

Das Aufbringen des Sammelleiters in Verfahrensschritt (b) erfolgt bevorzugt durch Aufdrucken und Einbrennen einer elektrisch leitfähigen Paste in einem Siebdruckverfahren oder in einem Inkjet-Verfahren. Alternativ kann der Sammelleiter als Streifen einer elektrisch leitfähigen Folie auf die elektrisch leitfähige Beschichtung aufgebracht, bevorzugt aufgelegt, angelötet oder angeklebt werden.

Bei Siebdruckverfahren erfolgt die laterale Formgebung durch die Maskierung des Gewebes, durch das die Druckpaste mit den Metallpartikeln gedrückt wird. Durch eine geeignete Formgebung der Maskierung kann beispielsweise die Breite b des Sammelleiters besonders einfach vorgeben und variiert werden.

Die Entschichtung einzelner Trennlinien in der elektrisch leitfähigen Beschichtung erfolgt vorzugsweise durch einen Laserstrahl. Verfahren zum Strukturieren dünner Metallfilme sind beispielsweise aus EP 2 200 097 A1 oder EP 2 139 049 A1 bekannt. Die Breite der Entschichtung beträgt bevorzugt 10 µm bis 1000 µm, besonders bevorzugt 30 µm bis 200 µm und insbesondere 70 µm bis 140 µm. In diesem Bereich findet eine besonders saubere und rückstandsfreie Entschichtung durch den Laserstrahl statt. Die Entschichtung mittels Laserstrahl ist besonders vorteilhaft, da die entschichteten Linien optisch sehr unauffällig sind und das Erscheinungsbild und die Durchsicht nur wenig beeinträchtigen. Die Entschichtung einer Linie mit einer Breite, die breiter ist als die Breite eines Laserschnitts, erfolgt durch mehrmaliges Abfahren der Linie mit dem Laserstrahl. Die Prozessdauer und die Prozesskosten steigen deshalb mit zunehmender Linienbreite an. Alternativ kann die Entschichtung durch mechanisches Abtragen sowie durch chemisches oder physikalisches Ätzen erfolgen.

Eine vorteilhafte Weiterbildung des erfindungsgemäßen Verfahrens umfasst mindestens die folgenden weiteren Schritte:
(d) Anordnen einer thermoplastischen Zwischenschicht auf der beschichteten Oberfläche der ersten Scheibe und Anordnen einer zweiten Scheibe auf der thermoplastischen Zwischenschicht und
(e) Verbinden der ersten Scheibe und der zweiten Scheibe über die thermoplastische Zwischenschicht.

In Verfahrensschritt (d) wird die erste Scheibe so angeordnet, dass diejenige ihrer Oberflächen, welche mit der elektrischen Heizschicht versehen ist, der thermoplastischen Zwischenschicht zugewandt ist. Die Oberfläche wird dadurch zur innenseitigen Oberfläche der ersten Scheibe.

Die thermoplastische Zwischenschicht kann durch eine einzelne oder auch durch zwei oder mehrere thermoplastische Folien, die flächenmäßig übereinander angeordnet werden, ausgebildet werden.

Das Verbinden von erster und zweiter Scheibe in Verfahrensschritt (e) erfolgt bevorzugt unter Einwirkung von Hitze, Vakuum und/oder Druck. Es können an sich bekannte Verfahren zur Herstellung einer Scheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80 °C bis 110 °C. Die erste Scheibe, die thermoplastische Zwischenschicht und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Die Erfindung umfasst weiter die Verwendung der erfindungsgemäßen Scheibe mit elektrischer Kontaktierung in Gebäuden, insbesondere im Zugangsbereich, Fensterbereich, Dachbereich oder Fassadenbereich, als Einbauteil in Möbeln und Geräten, in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und/oder Dachscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:

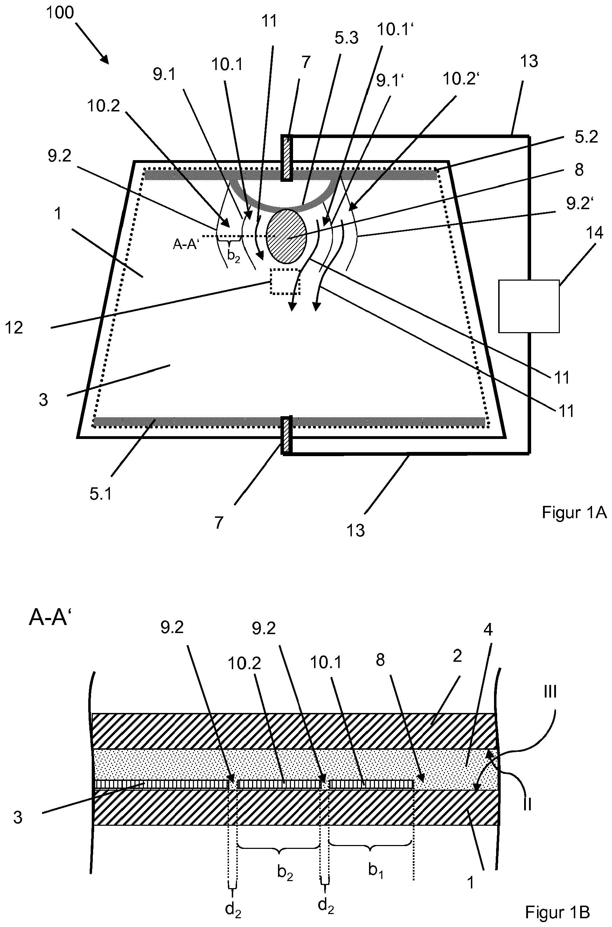

- Figur 1A: eine Draufsicht auf eine Ausgestaltung der erfindungsgemäßen Scheibe mit elektrischer Heizschicht,
- Figur 1: B eine Querschnittsdarstellung entlang der Schnittlinie A-A' durch die Scheibe nach Figur 1A,
- Figur 1C: eine vergrößerte Darstellung eines Ausschnitts aus Figur 1A,
- Figur 2A: eine Draufsicht auf eine Scheibe nach dem Stand der Technik als Vergleichsbeispiel,
- Figur 2B: Simulation der Heizleistungsverteilung des Vergleichsbeispiels nach Figur 2A,
- Figur 2C: Simulation der Temperaturverteilung des Vergleichsbeispiels nach Figur 2A,
- Figur 3A: eine Draufsicht auf eine weitere Ausgestaltung der erfindungsgemäßen Scheibe,
- Figur 3B: Simulation der Heizleistungsverteilung der erfindungsgemäßen Scheibe nach Figur 3A,
- Figur 3C: Simulation der Temperaturverteilung der erfindungsgemäßen Scheibe nach Figur 3A,
- Figur 4: eine Draufsicht auf eine weitere Ausgestaltung der erfindungsgemäßen Scheibe,
- Figur 5: eine Draufsicht auf eine weitere Ausgestaltung der erfindungsgemäßen Scheibe und
- Figur 6: ein detailliertes Flussdiagramm einer Ausführungsform des erfindungsgemäßen Verfahrens.

Figur 1A zeigt eine Draufsicht auf eine beispielhafte Ausgestaltung einer erfindungsgemäßen Scheibe 100 mit elektrischer Heizschicht. Figur 1B zeigt einen Querschnitt durch die erfindungsgemäße Scheibe 100 aus Figur 1A entlang der Schnittlinie A-A'. Die Scheibe 100 umfasst eine erste Scheibe 1 und eine zweite Scheibe 2, die über eine thermoplastische Zwischenschicht 4 miteinander verbunden sind. Die Scheibe 100 ist beispielsweise eine Fahrzeugscheibe und insbesondere die Windschutzscheibe eines Personenkraftwagens. Die erste Scheibe 1 ist beispielsweise dafür vorgesehen, in Einbaulage dem Innenraum zugewandt zu sein. Die erste Scheibe 1 und die zweite Scheibe 2 bestehen aus Natron-Kalkglas. Die Dicke der ersten Scheibe 1 beträgt beispielsweise 1,6 mm und die Dicke der zweiten Scheibe 2 beträgt 2,1 mm. Die thermoplastische Zwischenschicht 4 besteht aus Polyvinylbutyral (PVB) und weist eine Dicke von 0,76 mm auf. Auf der innenseitigen Oberfläche III der ersten Scheibe 1 ist eine elektrische Heizschicht 3 aus einer elektrisch leitfähigen Beschichtung aufgebracht. Die elektrische Heizschicht 3 ist ein Schichtensystem, welches beispielsweise drei elektrisch leitfähige Silberschichten enthält, die durch dielektrische Schichten voneinander getrennt sind. Fließt ein Strom durch die elektrische Heizschicht 3, so wird sie infolge ihres elektrischen Widerstands und joulscher Wärmeentwicklung erwärmt. Die elektrische Heizschicht 3 kann daher für eine aktive Beheizung der Scheibe 100 verwendet werden.

Die elektrische Heizschicht 3 erstreckt sich beispielsweise über die gesamte Oberfläche III der ersten Scheibe 1 abzüglich eines umlaufenden rahmenförmigen unbeschichteten Bereichs mit einer Breite von 8 mm. Der unbeschichtete Bereich dient der elektrischen Isolierung zwischen der spannungsführenden elektrischen Heizschicht 3 und der Fahrzeugkarosserie. Der unbeschichtete Bereich ist durch Verkleben mit der Zwischenschicht 4 hermetisch versiegelt, um die elektrische Heizschicht 3 vor Beschädigungen und Korrosion zu schützen.

Zur elektrischen Kontaktierung ist jeweils ein erster Sammelleiter 5.1 im unteren Randbereich und ein weiterer, zweiter Sammelleiter 5.2 im oberen Randbereich auf der elektrischen Heizschicht 3 angeordnet. Die Sammelleiter 5.1, 5.2 enthalten beispielsweise Silberpartikel und wurden im Siebdruckverfahren aufgebracht und anschließend eingebrannt. Die Länge der Sammelleiter 5.1, 5.2 entspricht annähernd der Ausdehnung der elektrischen Heizschicht 3.

Wird an die Sammelleiter 5.1 und 5.2 eine elektrische Spannung angelegt, so fließt ein gleichmäßiger Strom durch die elektrische Heizschicht 3 zwischen den Sammelleitern 5.1, 5.2. Auf jedem Sammelleiter 5.1, 5.2 ist ungefähr mittig eine Zuleitung 7 angeordnet. Die Zuleitung 7 ist ein an sich bekannter Folienleiter. Die Zuleitung 7 ist über eine Kontaktfläche mit dem Sammelleiter 5.1, 5.2 elektrisch leitend verbunden, beispielsweise mittels einer Lotmasse, eines elektrisch leitfähigen Klebstoffs oder durch einfaches Aufliegen und Andruck innerhalb der Scheibe 100. Der Folienleiter enthält beispielsweise eine verzinnte Kupferfolie mit einer Breite von 10 mm und einer Dicke von 0,3 mm. Über die elektrischen Zuleitungen 7 sind die Sammelleiter 5.1, 5.2 über Verbindungskabel 13 mit einer Spannungsquelle 14 verbunden, welche eine für Kraftfahrzeuge übliche Bordspannung, bevorzugt von 12 V bis 15 V und beispielsweise etwa 14 V bereitstellt. Alternativ kann die Spannungsquelle 14 V auch höhere Spannungen aufweisen, beispielsweise von 35 V bis 45 V und insbesondere 42 V.

Am oberen Rand der Scheibe 100 ist beispielsweise ein dritter Sammelleiter 5.3 in Form einer halben Kreislinie angeordnet, der mit dem zweiten Sammelleiter 5.2 elektrisch leitend verbunden ist. Alternativ kann der dritte Sammelleiter 5.3 rechteckig, dreieckig, trapezförmig oder anderweitig ausgebildet sein. Der dritte Sammelleiter 5.3 hat beispielsweise eine Breite von 10 mm.

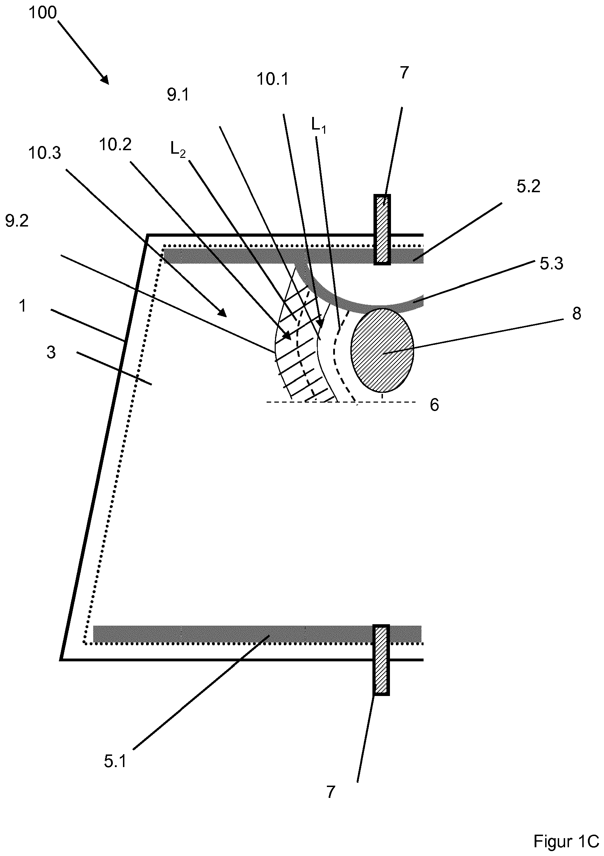

Im oberen Bereich der Scheibe 100 ist etwa mittig zur Scheibenbreite eine unbeschichtete Zone 8 angeordnet. Die unbeschichtete Zone 8 weist kein elektrisch leitfähiges Material der elektrischen Heizschicht 3 auf. Die unbeschichtete Zone 8 ist beispielsweise vollständig von der elektrischen Heizschicht 3 umgeben. Alternativ kann die unbeschichtete Zone 8 am Rand der elektrischen Heizschicht 3 angeordnet sein. Die Fläche der unbeschichteten Zone 8 beträgt beispielsweise 1,5 dm². Die Länge der unbeschichteten Zone 8 beträgt beispielsweise 18 cm. Länge bedeutet hier die Abmessung in die Richtung, die in Richtung des Strompfads durch die Scheibe, also in Richtung der kürzesten Verbindungslinie zwischen den Sammelleitern 5.1, 5.2 verläuft. Im Beispiel der Fahrzeugscheibe aus Figur 1 ist die Länge der unbeschichteten Zone 8 in vertikaler Richtung und die Breite in horizontaler Richtung, parallel zu den Sammelleitern 5.1, 5.2 angeordnet. Die unbeschichtete Zone 8 grenzt an ihrem oberen Ende an den Sammelleiter 5.3.

Die Sammelleiter 5.1, 5.2, 5.3 haben im dargestellten Beispiel eine konstante Dicke von beispielsweise etwa 10 µm und einen konstanten spezifische Widerstand von beispielsweise 2.3 µOhm•cm.

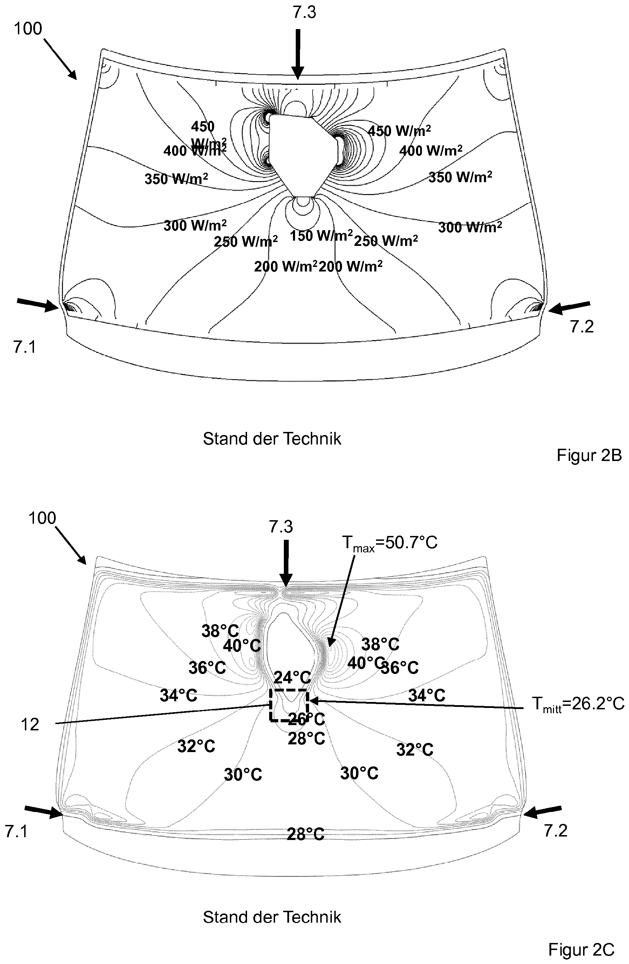

Die elektrische Heizschicht 3 weist vier Trennlinien 9.1, 9.1', 9.2, 9.2' auf, die beispielsweise spiegelsymmetrisch zur unbeschichteten Zone 8 angeordnet sind. Im Bereich der Trennlinien 9.1, 9.1', 9.2, 9.2' ist die elektrische Heizschicht 3 elektrisch unterbrochen. Die Trennlinien 9.1, 9.1', 9.2, 9.2' sind streifenförmig um die unbeschichtete Zone 8 angeordnet und bilden Segmente 10.1, 10.1', 10.2, 10.2', 10.3, 10.3' in der elektrischen Heizschicht 3. Die Strompfade 11 werden durch die Segmente 10.1, 10.1', 10.2, 10.2' in der elektrischen Heizschicht 3 um die unbeschichtete Zone 8 gelenkt. Dabei werden insbesondere die Strompfade 11 in den Segmenten 10.1, 10.1' in unmittelbarerer Nachbarschaft zur unbeschichteten Zone 8 in den Bereich 12 unterhalb der unbeschichteten Zone 8 geführt. In diesem Bereich 12 würde in einer elektrischen Heizschicht 3 nach dem Stand der Technik ohne Trennlinien nur eine geringe Heizleistung erzielt werden (siehe Heizleistungsverteilung nach dem Stand der Technik in Figur 2B).

Figur 1B zeigt schematisch einen Querschnitt durch die erfindungsgemäße Scheibe 100 entlang der Schnittlinie A-A'. Die Trennlinien 9.1, 9.1', 9.2 und 9.2' haben eine Breite d₁, d_{1'}, d₂ und d_{2'} von beispielsweise 100 µm und sind beispielsweise durch Laserstrukturierung in die elektrische Heizschicht 3 eingebracht. Trennlinien 9.1, 9.1', 9.2, 9.2' mit einer derart geringen Breite sind optisch kaum wahrnehmbar und stören die Durchsicht durch die Scheibe 100 nur wenig, was besonders für eine Verwendung in Fahrzeugen von besonderer Wichtigkeit für die Fahrsicherheit ist.

Durch eine an sich bekannte opake Farbschicht als Abdeckdruck kann verhindert werden, dass der Bereich des dritten Sammelleiters 5.3 für einen Betrachter sichtbar ist. Der hier nicht dargestellte Abdeckdruck kann beispielsweise auf der innenseitigen Oberfläche II der zweiten Scheibe 2 rahmenförmig aufgebracht sein.

Zwischen der Zuleitung 7 und dem Sammelleiter 5.1, 5.2 kann ein hier nicht dargestelltes Kontaktband angeordnet sein. Das Kontaktband dient der einfachen Verbindung des Sammelleiters 5.1, 5.2 mit einer äußeren Zuleitung 7 und ist beispielsweise orthogonal zur Zuleitung 7 und in Erstreckungsrichtung 6 des Sammelleiters 5.1, 5.2 angeordnet. Das Kontaktband erhöht vorteilhaft die Stromtragfähigkeit des Sammelleiters 5.1, 5.2. Dadurch wird die Überleitung des elektrischen Stroms vom Sammelleiter 5.1, 5.2 zur Zuleitung 7 auf eine größere Fläche verteilt und lokale Überhitzungen, sogenannten Hot Spots, vermieden. Das Kontaktband steht beispielsweise vollflächig in direktem Kontakt zum Sammelleiter 5.1, 5.2. Das Kontaktband wird beispielsweise bei der Herstellung der Scheibe 100 auf den Sammelleiter 5.1, 5.2 aufgelegt und wird durch die thermoplastische Schicht 4 dauerhaft stabil auf dem Sammelleiter 5.1, 5.2 fixiert. Das Kontaktband besteht beispielsweise aus Kupfer und weist eine Dicke von 100 µm, eine Breite von 8 mm und eine Länge von 5 cm auf. Das Kontaktband und der Sammelleiter 5.1, 5.2 stehen bevorzugt in direktem Kontakt. Die elektrische Verbindung erfolgt also nicht über eine Lotmasse oder einen elektrisch leitfähigen Klebstoff. Dadurch wird der Herstellungsprozess der Scheibe 100 entscheidend vereinfacht. Zudem kann die Gefahr von Beschädigungen des Sammelleiters 5.1, 5.2, wie sie beispielsweise beim Löten oder bei Belastung einer gelöteten Verbindung besteht, vermieden werden.

Figur 1C zeigt eine vergrößerte Darstellung eines Ausschnitts im Bereich der unbeschichteten Zone 8 und der Trennlinien 9.1, 9.2 die auf der linken Seite der unbeschichteten Zone 8 angeordnet sind. Das Segment 10.2 zwischen den Trennlinien 9.1 und 9.2 ist beispielhaft schraffiert dargestellt. Alle Trennlinien 9.1, 9.2 enden an der Linie 6 unterhalb des unbeschichteten Bereichs 8. Des Weiteren ist die mittlere Länge L₁ des Segments 10.1 und die mittlere Länge L₂ des Segments 10.2 eingezeichnet. Die mittlere Länge L₁ beträgt beispielsweise 25 cm. Die mittlere Länge L₂ beträgt beispielsweise 28 cm. In einer vorteilhaften Ausgestaltung der Erfindung sind die mittleren Längen L₁ und L₂ in etwa gleich lang ausgebildet. Die mittlere Länge L eines Segments 10.1, 10.2 wird im Allgemeinen durch die Krümmung der Trennlinien und dadurch durch die Krümmung des Segments sowie durch die Position des oberen Sammelleiters 5.2 und eventuell des dritten Sammelleiters 5.3 bestimmt. Eine für eine homogene Heizleistungsverteilung optimale mittlere Länge L des Segments 10.1, 10.2 und kann im Rahmen einfacher Experimente und Simulationen ermittelt werden.

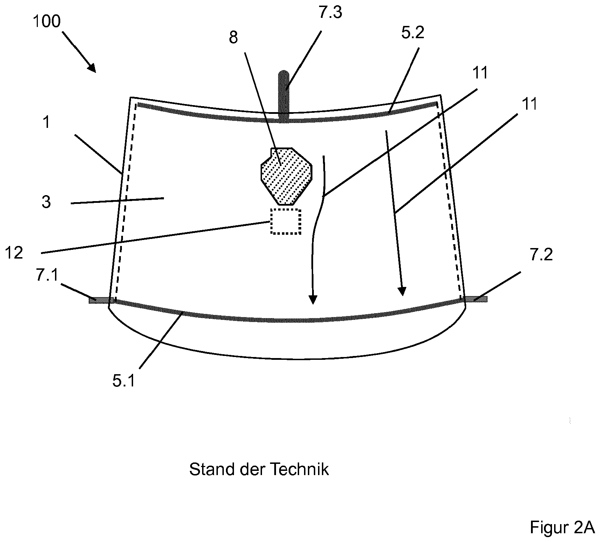

Figur 2A zeigt eine Scheibe 100 nach dem Stand der Technik. Die Scheibe 100 umfasst eine erste Scheibe 1 und eine zweite Scheibe 2, die über eine thermoplastische Zwischenschicht 4 miteinander verbunden sind. Die Scheibe 100 ist beispielsweise eine Fahrzeugscheibe und insbesondere die Windschutzscheibe eines Personenkraftwagens. Die erste Scheibe 1 ist beispielsweise dafür vorgesehen, in Einbaulage dem Innenraum zugewandt zu sein. Die erste Scheibe 1 und die zweite Scheibe 2 bestehen aus Natron-Kalkglas. Die Dicke der ersten Scheibe 1 beträgt beispielsweise 1,6 mm und die Dicke der zweiten Scheibe 2 beträgt 2,1 mm. Die thermoplastische Zwischenschicht 4 besteht aus Polyvinylbutyral (PVB) und weist eine Dicke von 0,76 mm auf. Auf der innenseitigen Oberfläche III der ersten Scheibe 1 ist eine elektrische Heizschicht 3 aus einer elektrisch leitfähigen Beschichtung aufgebracht, die im Aufbau der elektrischen Heizschicht 3 aus Figur 1A entspricht. Im Unterschied zur Figur 1A weist der an der Unterkante der Scheibe 100 angeordnete Sammelleiter 5.1 zwei Zuleitungen 7.1, 7.2 auf. Die Sammelleiter 5.1, 5.2 haben jeweils eine konstante Dicke von beispielsweise 10 µm und einen konstanten spezifischen Widerstand von beispielsweise 2.3 µOhm•cm. Des Weiteren unterscheidet sich die Scheibe 100 nach dem Stand der Technik von der erfindungsgemäßen Scheibe 100 aus Figur 1A dadurch, dass keine Trennlinien in die elektrische Heizschicht 3 eingebracht sind.

Die Fläche der elektrischen Heizschicht 3 beträgt etwa 0,98 m². Die elektrische Heizschicht 3 weist im oberen Drittel der Scheibe und etwa mittig zur Scheibenbreite einen unbeschichteten Bereich 8 auf. Der unbeschichtete Bereich 8 hat beispielsweise eine maximale Breite von 21 cm, eine maximale Länge von 24 cm und eine Gesamtfläche von 400 cm².

Die Scheibe weist an der oberen Kante einen Sammelleiter 5.2 auf. Der Strom wird durch eine Zuleitung 7, gekennzeichnet durch einen Pfeil, in den Sammelleiter 5.2 eingespeist. Der Strom fließt durch die elektrische Heizschicht 3 in einen Sammelleiter 5.1, der im unteren Bereich der Scheibe 100 angeordnet ist. Der Sammelleiter 5.1 ist an seinem rechten und seinem linken Ende mit jeweils einer Zuleitung 7.1, 7.2 verbunden. Die Sammelleiter 5.1, 5.2 haben beispielsweise eine Breite von 16 mm und eine Dicke von 10 µm. Die elektrische Heizschicht 3 hat beispielsweise einen Flächenwiderstand von 0.9 Ohm/Quadrat. Für eine Finite-Elemente-Simulation wurde eine Spannung von 14 V zwischen den unteren Zuleitungen 7.1 und 7.2 und der oberen Zuleitung 7 und eine Umgebungstemperatur von 22°C angenommen. Des Weiteren wurde in der Simulation eine Heizzeit von 12 min. angenommen.

Figur 2B zeigt die Simulation der Heizleistungsverteilung der Scheibe 100 nach dem Stand der Technik gemäß Figur 2A ohne Trennlinien in der elektrischen Heizschicht 3. Die elektrische Leistung der Scheibe beträgt 318 W.

Figur 2C zeigt die Simulation der Temperaturverteilung des Vergleichsbeispiels nach dem Stand der Technik gemäß Figur 2A. Die maximale Temperatur Tₘₐₓ auf der Scheibe 100 beträgt 50,7° C, die mittlere Temperatur Tₘᵢₜₜ im Bereich 12 unterhalb der unbeschichteten Zone 8 beträgt 26,2 °C.

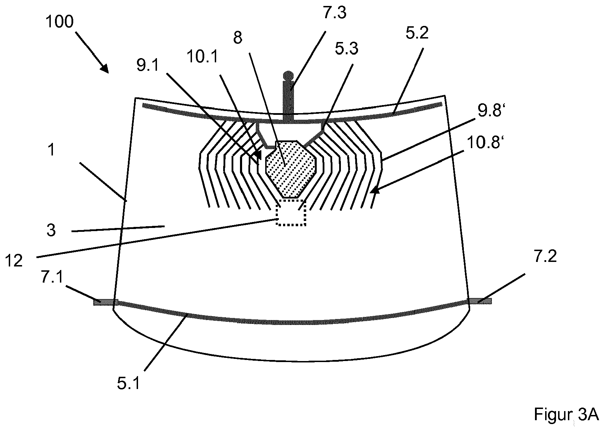

Figur 3A zeigt eine Draufsicht auf eine weitere Ausgestaltung einer erfindungsgemäßen Scheibe 100. Die erste Scheibe 1, die zweite Scheibe 2, die elektrische Heizschicht 3, die thermoplastische Zwischenschicht 4 und die äußeren Zuleitungen 7, 7.1, 7.2 sind wie in Figur 2A ausgestaltet. Die elektrische Heizschicht 3 weist eine unbeschichtete Zone 8 auf, die derjenigen aus Figur 2A entspricht. im oberen Bereich der Scheibe 100 ist ein dritter Sammelleiter 5.3 angeordnet. Des Weiteren weist die elektrische Heizschicht 3 jeweils acht Trennlinien 9.1-9.8, 9.1'-9.8' auf beiden Seiten der unbeschichteten Zone 8 auf. Durch die Trennlinien 9.1-9.8, 9.1'-9.8' werden jeweils acht Segmente 10.1-10.8, 10.1'-10.8' auf jeder der beiden Seiten der unbeschichteten Zone 8 gebildet, durch die der Strompfad vom Sammelleiter 5.2 oder dem dritten Sammelleiter 5.3 in den Bereich unterhalb der unbeschichteten Zone 8 geleitet wird. Wie die folgenden Simulationen zeigen, kann dadurch eine Homogenisierung der Heizleistungsverteilung und der Temperaturverteilung der erfindungsgemäßen Scheibe 100 erzielt werden. Die Trennlinien 9 werden bevorzugt durch Laserstrukturierung in die elektrische Heizschicht 3 eingebracht. Die Breite der einzelnen Trennlinien 9 beträgt beispielsweise 100 µm, wodurch die Sicht durch die Scheibe 100 nur minimal beeinträchtigt wird.

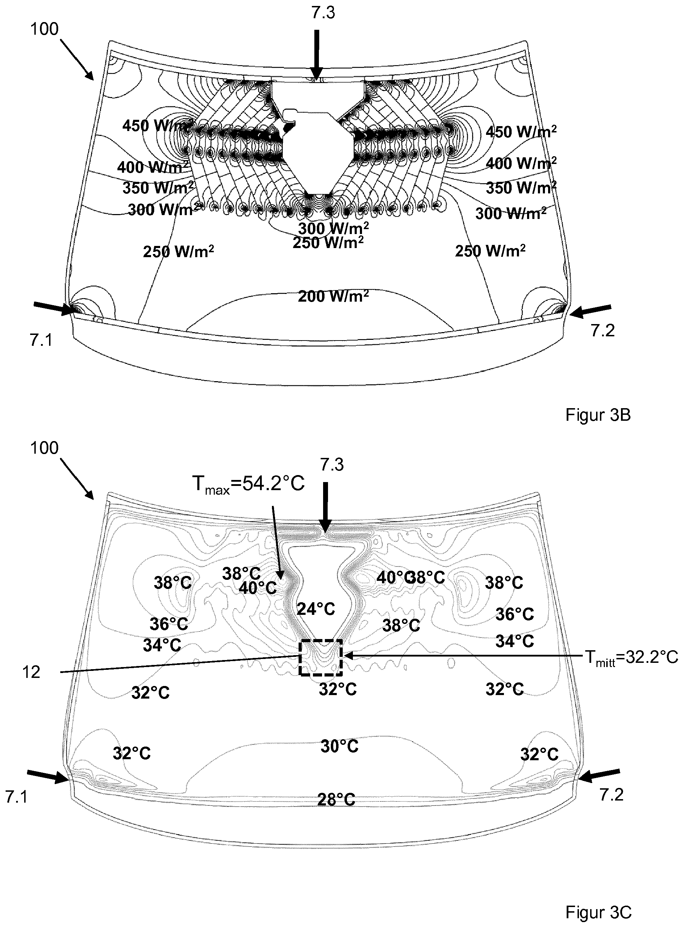

Figur 3B zeigt die Simulation der Heizleistungsverteilung der erfindungsgemäßen Scheibe 100 nach Figur 3A. Die elektrische Leistung der Scheibe beträgt 312 W.

Figur 3C zeigt die Simulation der Temperaturverteilung der erfindungsgemäßen Scheibe 100 nach Figur 3A. Die maximale Temperatur Tₘₐₓ auf der Scheibe 100 beträgt 54,2° C, die mittlere Temperatur Tₘᵢₜₜ im Bereich 12 unterhalb der unbeschichteten Zone 8 beträgt 32,2 °C.

In Tabelle 1 sind die Simulationsergebnisse nochmals zusammengefasst.

**Tabelle 1**

| | Heizleistung im Bereich 12 unterhalb der unbeschichteten Zone 8 | Mittlere Temperatur Tₘᵢₜₜ im Bereich 12 unterhalb der beschichtungsfreien Zone 8 | Heizleistungs verteilung |
|---|---|---|---|
| Vergleichsbeispiel nach Figur 2A (Stand der Technik) | < 150 W/m² | 26,2° C | Schlecht |
| Erfindungsgemäße Scheibe 100 nach Figur 3A | > 300 W/m² | 32,2°C | Gut |

Die erfindungsgemäße Scheibe 100 nach Figur 3A zeigt deutlich verbesserte Heizeigenschaften als die Scheibe 100 nach dem Stand der Technik des Vergleichsbeispiels aus Figur 2A. Insbesondere im Bereich 12 unterhalb der unbeschichteten Zone 8 weist die Scheibe nach dem Stand der Technik nur eine Heizleistung von < 150 W/m² und eine mittlere Temperatur von etwa 26,2°C auf. Die Inhomogenität der Heizleistungsverteilung führt nur zu einer unbefriedigenden Abtau- und Antibeschlagfunktion der Scheibe 100. Im zentralen Sichtfeld im Bereich 12 unterhalb der unbeschichteten Zone 8 genügen die Heizeigenschaften nicht um eine einwandfreie Sicht durch die Scheibe 100 bei winterlichen Witterungsverhältnissen zu gewährleisten.

Die erfindungsgemäße Scheibe 100 nach Figur 3A weist im kritischen Bereich 12 unterhalb der unbeschichteten Zone 8 verbesserte Heizeigenschaften auf. So ergaben Simulationen eine Heizleistung von mehr als 300 W/m² und eine Erwärmung auf eine mittlere Temperatur von etwa 32,2°C unter den Simulationsbedingungen. Durch die geringe Breite der Trennlinien ist die Sicht durch die Scheibe nur minimal beeinträchtigt und genügt den Anforderungen an eine Fahrzeugverglasung.

Dieses Ergebnis war für den Fachmann unerwartet und überraschend.

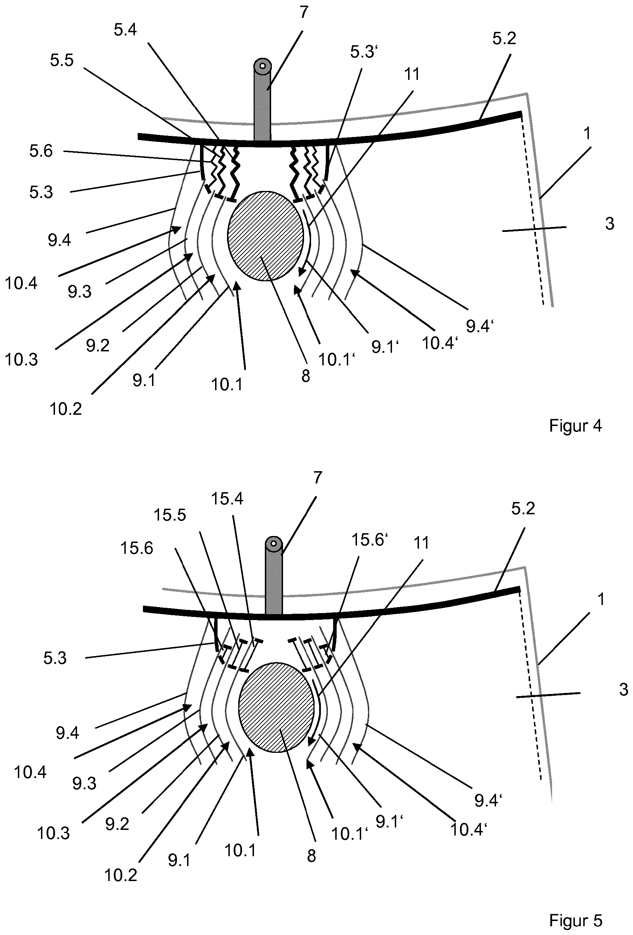

Figur 4 zeigt eine Draufsicht auf einen Ausschnitt auf eine weitere Ausgestaltung einer erfindungsgemäßen Scheibe 100. Die erste Scheibe 1 mit der elektrischen Heizschicht 3, die zweite Scheibe 2, die thermoplastische Zwischenschicht 4 und die äußeren Zuleitungen 7, 7.1, 7.2 sind wie in Figur 3A ausgestaltet. Die elektrische Heizschicht 3 weist eine unbeschichtete Zone 8 und Trennlinien 9.1-9.4, 9.1'-9.4' auf, die die elektrische Heizschicht 3 in mehrere Segmente 10.1-10.4, 10.1'-10.4' unterteilt. Die Segmente 10.1-10.4, 10.1'-10.4' sind dabei streifenförmig an den Seiten der unbeschichteten Zone 8 angeordnet. Des Weiteren weist jedes Segment 10.1-10.4, 10.1'-10.4' einen weiteren Sammelleiter 5.3-5.6, 5.3'-5.6' auf. Jeder Sammelleiter 5.3-5.6, 5.3'-5.6' ist dabei mit dem Sammelleiter 5.2 unmittelbar, elektrisch leitend, verbunden.

Aufgrund der Krümmung der Segmente 10.1-10.4, 10.1'-10.4' ist der Strompfad 11 durch das jeweilige Segment 10.1-10.4, 10.1'-10.4' verlängert und aufgrund des konstanten spezifischen Flächenwiderstands der elektrischen Heizschicht 3 der ohmsche Widerstand durch das Segment 10.1-10.4, 10.1'-10.4' erhöht. Dies würde zu einer inhomogenen Heizleistungsverteilung im Vergleich zu Strompfaden außerhalb der durch die Trennlinien 9.1-9.4, 9.1'-9.4' gebildeten Segmente 10.1-10.4, 10.1'-10.4' führen. Durch eine Verkürzung der Länge des Strompfad 11 durch das Segment 10.1-10.4, 10.1'-10.4' durch einen weiteren Sammelleiter 5.3-5.6, 5.3'-5.6' durch den der Strom in das Segment 10.1-10.4, 10.1'-10.4' eingespeist wird, kann eine weitere Homogenisierung der Heizleistungsverteilung und der Temperaturverteilung der elektrisch beheizten Scheibe 100 erzielt werden. Die Länge der weiteren Sammelleiter 5.3-5.6, 5.3'-5.6' und deren Abmessungen, wie Dicke und Breite, können im Rahmen einfacher Experimente und Simulationen ermittelt werden. Im dargestellten Beispiels sind die Sammelleiter 5.4-5.6, 5.4'-5.6' zickzackförmig ausgestaltet, wobei die Sammelleiter 5.4, 5.4' dicker als die Sammelleiter 5.5, 5.5' und diese wiederum dicker als die Sammelleiter 5.6, 5.6' ausgestaltet sind. Die Sammelleiter 5.4, 5.4' haben folglich einen niedrigeren Widerstand als die Sammelleiter 5.5, 5.5' und diese wiederum einen niedrigeren Widerstand als die Sammelleiter 5.6, 5.6'.

Figur 5 zeigt eine Draufsicht auf eine weitere Ausgestaltung einer erfindungsgemäßen Scheibe 100. Die erste Scheibe 1 mit der elektrischen Heizschicht 3 und die äußeren Zuleitungen 7, 7.1, 7.2 sind wie in Figur 4 ausgestaltet. Die elektrische Heizschicht 3 weist einen unbeschichtete Zone 8 und Trennlinien 9.1-9.4, 9.1'-9.4' auf, die die elektrische Heizschicht 3 in mehrere Segmente 10.1-10.4, 10.1'-10.4' unterteilt. Die Segmente 10.1-10.4, 10.1'-10.4' sind dabei streifenförmig an den Seiten der unbeschichteten Zone 8 angeordnet. Die Segmente 10.4 und 10.4', die am weitesten von der unbeschichteten Zone 8 angeordnet sind, weisen jeweils einen dritten Sammelleiter 5.3 und 5.3' auf, der mit dem Sammelleiter 5.2 unmittelbar, elektrisch leitend verbunden ist. Des Weiteren weisen die weiter innenliegenden Segmente 10.1-10.3, 10.1'-10.3' jeweils eine niederohmige Brücke 15.4-15.6, 15.4'-15.6' auf, die den elektrischen Widerstand des Strompfads durch das jeweilige Segment erniedrigt. Die niederohmigen Brücken 15.4-15.6, 15.4'-15.6' bestehen beispielsweise aus dem Material des Sammelleiters 5.2 und haben einen elektrischen Widerstand, der niederohmiger ist als der der elektrischen Heizschicht 3. Die niederohmigen Brücken 15.4-15.6, 15.4'-15.6' sind dabei nicht unmittelbar mit dem Sammelleiter 5.2 elektrisch leitend verbunden, sondern sind auf ihrer vollen Länge mit der elektrischen Heizschicht 3 elektrisch leitend verbunden.

Aufgrund der Krümmung der Segmente 10.1-10.4, 10.1'-10.4' ist der Strompfad 11 durch das jeweilige Segment 10.1-10.4, 10.1'-10.4' verlängert und aufgrund des konstanten spezifischen Flächenwiderstands der elektrischen Heizschicht 3 der ohmsche Widerstand durch das Segment 10.1-10.4, 10.1'-10.4' erhöht. Dies würde zu einer inhomogenen Heizleistungsverteilung im Vergleich zu Strompfaden außerhalb der durch die Trennlinien 9.1-9.4, 9.1'-9.4'gebildeten Segmente 10.1-10.4, 10.1'-10.4' führen. Durch eine Verkürzung der Länge des Strompfad 11 durch die niederohmigen Brücken 15.4-15.6, 15.4'-15.6', kann eine weitere Homogenisierung der Heizleistungsverteilung und der Temperaturverteilung der elektrisch beheizten Scheibe 100 erzielt werden. Die Länge der niederohmigen Brücken 15.4-15.6, 15.4'-15.6' und deren optimaler elektrischer Widerstand können im Rahmen einfacher Experimente und Simulationen ermittelt werden.

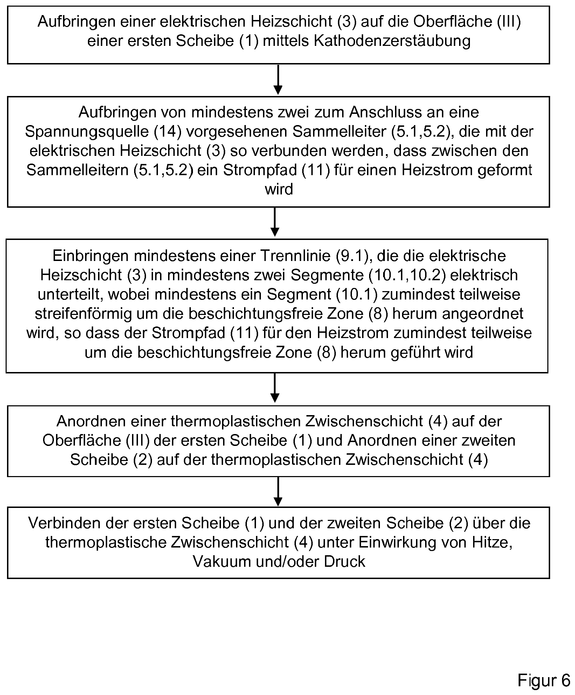

Figur 6 zeigt ein Flussdiagramm eines Ausführungsbeispiels des erfindungsgemäßen Verfahrens zur Herstellung einer elektrisch beheizbaren Scheibe 100.

Es konnte gezeigt werden, dass erfindungsgemäße Scheiben 100 mit Trennlinien deutlich verbesserte Heizeigenschaften, eine verbesserte Homogenität der Heizleistungsverteilung und eine gleichmäßigere Temperaturverteilung bei höheren Temperaturen in besonders wichtigen Scheibenabschnitten zeigen. Gleichzeitig wird die Durchsicht durch die Scheibe 100 durch die erfindungsgemäßen Trennlinien nur minimal beeinträchtigt.

Dieses Ergebnis war für den Fachmann unerwartet und überraschend.

### Bezugszeichenliste:

(1) erste Scheibe
(2) zweite Scheibe
(3) elektrische Heizschicht,
(4) thermoplastische Zwischenschicht
(5.1), (5.2), (5.3), (5.4), (5.5) Sammelleiter
(5.1'), (5.2'), (5.3'), (5.4'), (5.5') Sammelleiter
(6) Linie
(7) Zuleitung
(8) unbeschichtete Zone
(9.1), (9.2), (9.3), (9.4), (9.5), (9.6), (9.7), (9.8) Trennlinie
(9.1'), (9.2'), (9.3'), (9.4'), (9.5'), (9.6'), (9.7'), (9.8') Trennlinie
(10.1), (10.2), (10.3), (10.4), (10.5), (10.6), (10.7), (10.8) Segment
(10.1'), (10.2'), (10.3'), (10.4'), (10.5'), (10.6'), (10.7'), (10.8') Segment
(11) Strompfad
(12) Bereich
(13) Verbindungskabel
(14) Spannungsquelle
(15.4), (15.5), (15.6), (15.4'), (15.5'), (15.6') niederohmige Brücke
(100) Scheibe
(II) Oberfläche der zweiten Scheibe 2
(III) Oberfläche der ersten Scheibe 1
b, b₁, b₂ Breite des Segments 10, 10.1, 10.2
d, d₁, Breite der Trennlinie 9
L, L₁, L₂ Länge des Segments 10, 10.1, 10.2
A-A' Schnittlinie

## Patentansprüche

1. Scheibe (100) mit elektrischer Heizschicht (3), mindestens umfassend:
- eine erste Scheibe (1) mit einer Oberfläche (III),
- mindestens eine elektrische Heizschicht (3), die zumindest auf einem Teil der Oberfläche (III) aufgebracht ist und eine unbeschichtete Zone (8) umfasst,
- mindestens zwei zum Anschluss an eine Spannungsquelle (14) vorgesehene Sammelleiter (5.1, 5.2), die mit der elektrischen Heizschicht (3) so verbunden sind, dass zwischen den Sammelleitern (5.1, 5.2) ein Strompfad (11) für einen Heizstrom geformt ist und
- mindestens eine Trennlinie (9.n), die die elektrische Heizschicht (3) in mindestens zwei Segmente (10.n, 10.n+1) elektrisch unterteilt,
wobei mindestens ein Segment (10.n) streifenförmig um die unbeschichtete Zone (8) so angeordnet ist, dass der Strompfad (11) für den Heizstrom zumindest teilweise um die unbeschichtete Zone (8) geführt ist,
wobei ein dritter Sammelleiter (5.3) in unmittelbarem elektrischem Kontakt zum zweiten Sammelleiter (5.2) angeordnet ist, der die mittlere Länge Lₙ mindestens eines Segments (10.n) und bevorzugt die mittlere Länge Lₙ aller Segmente (10.n) verkürzt, oder
wobei jedes streifenförmig um die unbeschichtete Zone (8) angeordnete Segment (10.n) einen eigenen dritten Sammelleiter (5.3-5-6, 5.3'-5.6') aufweist, wobei jeder dritte Sammelleiter (5.3-5-6, 5.3'-5.6') mit dem zweiten Sammelleiter (5.2) unmittelbar elektrisch leitend verbunden ist, oder
wobei in mindestens einem Segment (10.n) eine niederohmige Brücke (15.n) angeordnet ist, die den elektrischen Widerstand entlang des Strompfades erniedrigt.

2. Scheibe (100) nach Anspruch 1, wobei die elektrische Heizschicht (3) mindestens zwei Trennlinien (9.1, 9.2) und bevorzugt 4 bis 30 Trennlinien aufweist, die Segmente (10.n) ausbilden, die zumindest teilweise streifenförmig um die unbeschichtete Zone (8) angeordnet sind.

3. Scheibe (100) nach Anspruch 1 oder Anspruch 2, wobei die Breite d der Trennlinie (9.1, 9.2) von 30 µm bis 200 µm und bevorzugt von 70 µm bis 140 µm beträgt.

4. Scheibe (100) nach einem der Ansprüche 1 bis 3, wobei die Breite b₁ des Segments (10.1) zwischen unbeschichteter Zone (8) und nächstliegender Trennlinie (9.1) und/oder die Breite bₙ zwischen zwei benachbarten Trennlinien (9.n, 9.n+1) von 1 cm bis 15 cm beträgt.

5. Scheibe (100) nach einem der Ansprüche 1 bis 4, wobei die Fläche der unbeschichteten Zone (8) von 0,5 dm² bis 15 dm² und bevorzugt von 2 dm² bis 8 dm² beträgt.

6. Scheibe (100) nach einem der Ansprüche 1 bis 5, wobei die mittleren Länge (Lₙ) des Segments (10.n) um weniger als 25 %, bevorzugt von 0 % bis 10 % und besonders bevorzugt von 0 % bis 5 % vom Mittelwert der mittleren Längen Lₘ abweicht.

7. Scheibe (100) nach einem der Ansprüche 1 bis 6, wobei die Sammelleiter (5) und/oder die niederohmige Brücke (15.n) als gebrannte Druckpaste ausgebildet ist, die bevorzugt metallische Partikel, Metallpartikel und/oder Kohlenstoffpartikel und insbesondere Silberpartikel enthält und bevorzugt einen spezifischen Widerstand ρₐ von 0.8 µOhm•cm bis 7.0 µOhm•cm und besonders bevorzugt von 1.0 µOhm•cm bis 2.5 µOhm•cm aufweist.

8. Scheibe (100) nach einem der Ansprüche 1 bis 7, wobei die Oberfläche (III) der ersten Scheibe (1) über eine thermoplastische Zwischenschicht (4) mit einer zweiten Scheibe (2) flächig verbunden ist.

9. Scheibe (100) nach einem der Ansprüche 1 bis 8, wobei die erste Scheibe (1) und/oder die zweite Scheibe (2) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält.

10. Scheibe (100) nach einem der Ansprüche 1 bis 9, wobei die elektrische Heizschicht (3) eine transparente, elektrisch leitfähige Beschichtung ist und/oder einen Flächenwiderstand von 0,4 Ohm/Quadrat bis 10 Ohm/Quadrat und bevorzugt von 0,5 Ohm/Quadrat bis 1 Ohm/Quadrat aufweist und/oder Silber (Ag), Indium-Zinnoxid (ITO), fluordotiertes Zinnoxid (SnO₂:F) oder aluminiumdotiertes Zinkoxid (ZnO:AI) enthält.

11. Verfahren zur Herstellung einer Scheibe (100) mit elektrischer Heizschicht, mindestens umfassend:
(a) Aufbringen einer elektrischen Heizschicht (3) mit einer unbeschichteten Zone (8) auf eine Oberfläche (III) einer Scheibe (1),
(b) Aufbringen von mindestens zwei zum Anschluss an eine Spannungsquelle (14) vorgesehene Sammelleiter (5.1, 5.2), die mit der elektrischen Heizschicht (3) so verbunden werden, dass zwischen den Sammelleitern (5.1,5.2) ein Strompfad (11) für einen Heizstrom geformt wird
(c) Einbringen mindestens einer Trennlinie (9.n), die die elektrische Heizschicht (3) in mindestens zwei Segmente (10.n, 10.n+1) elektrisch unterteilt,
wobei mindestens ein Segment (10.n) streifenförmig um die unbeschichtete Zone (8) so angeordnet wird, dass der Strompfad (11) für den Heizstrom zumindest teilweise um die unbeschichtete Zone (8) geführt wird,
wobei ein dritter Sammelleiter (5.3) in unmittelbarem elektrischem Kontakt zum zweiten Sammelleiter (5.2) angeordnet ist, der die mittlere Länge Lₙ mindestens eines Segments (10.n) und bevorzugt die mittlere Länge Lₙ aller Segmente (10.n) verkürzt, oder
wobei jedes streifenförmig um die unbeschichtete Zone (8) angeordnete Segment (10.n) einen eigenen dritten Sammelleiter (5.3-5-6, 5.3'-5.6') aufweist, wobei jeder dritte Sammelleiter (5.3-5-6, 5.3'-5.6') mit dem zweiten Sammelleiter (5.2) unmittelbar elektrisch leitend verbunden ist, oder
wobei in mindestens einem Segment (10.n) eine niederohmige Brücke (15.n) angeordnet ist, die den elektrischen Widerstand entlang des Strompfades erniedrigt.

12. Verfahren nach Anspruch 11, wobei die Trennlinien (9) durch Laserstrukturierung eingebracht werden.

13. Verwendung der Scheibe (100) nach einen der Ansprüche 1 bis 10 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden, insbesondere als elektrischer Heizkörper und der unbeschichteten Zone (8) als Kommunikationsfenster zur Datenübertragung.

## Claims

1. Pane (100) having an electric heating layer (3), comprising at least:
- a first pane (1) having a surface (III),
- at least one electric heating layer (3) that is applied at least on part of the surface (III) and includes an uncoated zone (8),
- at least two busbars (5.1, 5.2) provided for connection to a voltage source (14), which are connected to the electric heating layer (3) such that a current path (11) for a heating current is formed between the busbars (5.1, 5.2), and
- at least one separating line (9.n), which electrically subdivides the electric heating layer (3) into at least two segments (10.n, 10.n+1),
wherein at least one segment (10.n) is arranged in strip form around the uncoated zone (8) such that the current path (11) for the heating current is guided at least partially around the uncoated zone (8),
wherein a third busbar (5.3) is arranged in direct electrical contact with the second busbar (5.2), which shortens the average length Lₙ of at least one segment (10.n) and preferably the average length Lₙ of all segments (10.n), or
wherein each segment (10.n), which is arranged in strip from around the uncoated zone (8), has an own third busbar (5.3-5-6, 5.3'-5.6'), wherein each third busbar (5.3-5-6, 5.3'-5.6') is electrically conductively connected directly to the second busbar (5.2), or
wherein a low-impedance bridge (15.n), which reduces the electrical resistance along the current path, is arranged in at least one segment (10.n).

2. Pane (100) according to claim 1, wherein the electric heating layer (3) has at least two separating lines (9.1, 9.2) and preferably 4 to 30 separating lines, which form segments (10.n) that are arranged at least partially in strip form around the uncoated zone (8).

3. Pane (100) according to claim 1 or claim 2, wherein the width d of the separating line (9.1, 9.2) is from 30 µm to 200 µm and preferably from 70 µm to 140 µm.

4. Pane (100) according to one of claims 1 through 3, wherein the width b₁ of the segment (10.1) between the uncoated zone (8) and the nearest separating line (9.1) and/or the width bₙ between two adjacent separating lines (9.n, 9.n+1) is from 1 cm to 15 cm.

5. Pane (100) according to one of claims 1 through 4, wherein the area of the uncoated zone (8) is from 0.5 dm² to 15 dm² and preferably from 2 dm² to 8 dm².

6. Pane (100) according to one of claims 1 through 5, wherein the average length (Lₙ) of the segment (10.n) deviates by less than 25 %, preferably from 0 % to 10 % and particularly preferably from 0 % to 5 % from the mean of the average lengths Lₘ.

7. Pane (100) according to one of claims 1 through 6, wherein the busbars (5) and/or the low-impedance bridge (15.n) is implemented as fired printing paste, which preferably contains metallic particles, metal particles, and/or carbon particles and in particular silver particles and preferably has a specific resistance ρₐ from 0.8 µohm•cm to 7.0 µohm•cm and particularly preferably from 1.0 µohm•cm to 2.5 µohm•cm.

8. Pane (100) according to one of claims 1 through 7, wherein the surface (III) of the first pane (1) is bonded in planar manner to a second pane (2) via a thermoplastic intermediate layer (4).

9. Pane (100) according to one of claims 1 through 8, wherein the first pane (1) and/or the second pane (2) contains glass, preferably flat glass, float glass, quartz glass, borosilicate glass, soda lime glass, or polymers, preferably polyethylene, polypropylene, polycarbonate, polymethyl methacrylate, and/or mixtures thereof.

10. Pane (100) according to one of claims 1 through 9, wherein the electric heating layer (3) is a transparent, electrically conductive coating and/or has a sheet resistance from 0.4 ohm/square to 10 ohm/square and preferably from 0.5 ohm/square to 1 ohm/square and/or contains silver (Ag), indium tin oxide (ITO), fluorine-doped tin oxide (SnO₂:F), or aluminum-doped zinc oxide (ZnO:AI).

11. Method for producing a pane (100) having an electric heating layer, comprising at least:
(a) application of an electric heating layer (3) with an uncoated zone (8) on a surface (III) of a pane (1),
(b) application of at least two busbars (5.1, 5.2) provided for connection to a voltage source (14), which are connected to the electric heating layer (3) such that a current path (11) for a heating current is formed between the busbars (5.1, 5.2)
(c) introduction of at least one separating line (9.n), which electrically subdivides the electric heating layer (3) into at least two segments (10.n, 10.n+1),
wherein at least one segment (10.n) is arranged in strip form around the uncoated zone (8) such that the current path (11) for the heating current is guided at least partially around the uncoated zone (8),
wherein a third busbar (5.3) is arranged in direct electrical contact with the second busbar (5.2), which shortens the average length Lₙ of at least one segment (10.n) and preferably the average length Lₙ of all segments (10.n), or
wherein each segment (10.n), which is arranged in strip from around the uncoated zone (8), has an own third busbar (5.3-5-6, 5.3'-5.6'),
wherein each third busbar (5.3-5-6, 5.3'-5.6') is electrically conductively connected directly to the second busbar (5.2), or
wherein a low-impedance bridge (15.n), which reduces the electrical resistance along the current path, is arranged in at least one segment (10.n).

12. Method according to claim 11, wherein the separating lines (9) are introduced by laser patterning.

13. Use of the pane (100) according to one of claims 1 through 10 in means of transportation for travel on land, in the air, or on water, in particular in motor vehicles, for example, as a windshield, rear window, side windows, and/or a roof pane as well as a functional individual piece, and as a built-in component in furniture, devices, and buildings, in particular as an electric heater and of the uncoated zone (8) as a communication window for data transmission.

## Revendications

1. Vitre (100) comportant une couche de chauffage électrique (3), comprenant au moins:
- une première vitre (1) ayant une surface (III),
- au moins une couche de chauffage électrique (3) qui est appliquée au moins sur une partie de la surface (III) et qui comprend une zone non revêtue (8),
- au moins deux barres conductrices (5.1, 5.2) prévues pour le raccordement à une source de tension (14), qui sont reliées à la couche de chauffage électrique (3) de telle sorte qu'un trajet de courant (11) pour un courant de chauffage est formé entre les barres conductrices (5.1, 5.2), et
- au moins une ligne de séparation (9.n), qui subdivise électriquement la couche de chauffage électrique (3) en au moins deux segments (10.n, 10.n+1),
dans lequel au moins un segment (10.n) est disposé en forme de bande autour de la zone non revêtue (8) de telle sorte que le trajet de courant (11) pour le courant de chauffage est guidé au moins partiellement autour de la zone non revêtue (8),
dans lequel une troisième barre conductrice (5.3) est disposée en contact électrique direct avec la deuxième barre conductrice (5.2), ce qui raccourcit la longueur moyenne Lₙ d'au moins un segment (10.n) et de préférence la longueur moyenne Lₙ de tous les segments (10.n) ou
dans lequel chaque segment (10.n), qui est disposé en bande autour de la zone non revêtue (8), a une troisième barre conductrice propre (5.3-5-6, 5.3'-5.6'), dans lequel chaque troisième barre conductrice (5.3-5-6, 5.3'-5.6') est connectée de manière électriquement conductrice directement à la deuxième barre de conductrice (5.2), ou bien dans lequel un pont à faible impédance (15.n), qui réduit la résistance électrique le long du trajet du courant, est disposé dans au moins un segment (10.n).

2. Vitre (100) selon la revendication 1, dans laquelle la couche de chauffage électrique (3) présente au moins deux lignes de séparation (9.1, 9.2) et de préférence 4 à 30 lignes de séparation, qui forment des segments (10.n) disposés au moins partiellement en bande autour de la zone non revêtue (8).

3. Vitre (100) selon la revendication 1 ou la revendication 2, dans laquelle la largeur d de la ligne de séparation (9.1, 9.2) est de 30 µm à 200 µm et de préférence de 70 µm à 140 µm.

4. Vitre (100) selon l'une des revendications 1 à 3, dans laquelle la largeur b₁ du segment (10.1) entre la zone non revêtue (8) et la ligne de séparation la plus proche (9.1) et/ou la largeur bₙ entre deux lignes de séparation adjacentes (9.n, 9.n+1) est de 1 cm à 15 cm.

5. Vitre (100) selon l'une des revendications 1 à 4, dans laquelle la surface de la zone non revêtue (8) est comprise entre 0,5 dm² et 15 dm² et de préférence entre 2 dm² et 8 dm².

6. Vitre (100) selon l'une des revendications 1 à 5, dans laquelle la longueur moyenne (Lₙ) du segment (10.n) s'écarte de moins de 25 %, de préférence de 0 % à 10 % et plus particulièrement de 0 % à 5 % de la moyenne des longueurs moyennes Lₘ.

7. Vitre (100) selon l'une des revendications 1 à 6, dans laquelle les barres conductrices (5) et/ou le pont à faible impédance (15.n) sont réalisés sous forme de pâte d'impression cuite, qui contient de préférence des particules métalliques, des particules de métal et/ou des particules de carbone et notamment des particules d'argent et qui présente de préférence une résistance spécifique pa de 0,8 µohm•cm à 7,0 µohm•cm et de manière particulièrement préférée de 1,0 µohm•cm à 2,5 µohm•cm.

8. Vitre (100) selon l'une des revendications 1 à 7, dans laquelle la surface (III) de la première vitre (1) est collée de manière plane à une deuxième vitre (2) par l'intermédiaire d'une couche intermédiaire thermoplastique (4).

9. Vitre (100) selon l'une des revendications 1 à 8, dans laquelle la première vitre (1) et/ou la deuxième vitre (2) contient du verre, de préférence du verre plat, du verre flotté, du verre de quartz, du verre borosilicate, du verre sodocalcique, ou des polymères, de préférence du polyéthylène, du polypropylène, du polycarbonate, du polyméthacrylate de méthyle, et/ou des mélanges de ceux-ci.

10. Vitre (100) selon l'une des revendications 1 à 9, dans laquelle la couche chauffante électrique (3) est un revêtement transparent, électriquement conducteur et/ou présente une résistance de feuille de 0,4 ohm/carré à 10 ohm/carré et de préférence de 0,5 ohm/carré à 1 ohm/carré et/ou contient de l'argent (Ag), de l'oxyde d'indium-étain (ITO), de l'oxyde d'étain dopé au fluor (SnO₂:F) ou de l'oxyde de zinc dopé à l'aluminium (ZnO:Al).

11. Procédé de production d'une vitre (100) ayant une couche de chauffage électrique, comprenant au moins :
(a) application d'une couche de chauffage électrique (3) avec une zone non revêtue (8) sur une surface (III) d'une vitre (1),
(b) application d'au moins deux barres conductrices (5.1, 5.2) prévues pour le raccordement à une source de tension (14), qui sont reliées à la couche chauffante électrique (3) de telle sorte qu'un trajet de courant (11) pour un courant de chauffage est formé entre les barres conductrices (5.1, 5.2)
(c) introduction d'au moins une ligne de séparation (9.n), qui subdivise électriquement la couche de chauffage électrique (3) en au moins deux segments (10.n, 10.n+1),
dans lequel au moins un segment (10.n) est disposé en forme de bande autour de la zone non revêtue (8) de telle sorte que le trajet du courant (11) pour le courant de chauffage est guidé au moins partiellement autour de la zone non revêtue (8),
dans lequel une troisième barre conductrice (5.3) est disposée en contact électrique direct avec la deuxième barre conductrice (5.2), ce qui raccourcit la longueur moyenne Lₙ d'au moins un segment (10.n) et de préférence la longueur moyenne Ln de tous les segments (10.n) ou
dans lequel chaque segment (10.n), qui est disposé en bande autour de la zone non revêtue (8), possède sa propre troisième barre omnibus (5.3-5-6, 5.3'-5.6'),
dans lequel chaque troisième barre de bus (5.3-5-6, 5.3'-5.6') est connectée de manière électriquement conductrice directement à la deuxième barre de bus (5.2), ou
dans lequel un pont à faible impédance (15.n), qui réduit la résistance électrique le long du trajet du courant, est disposé dans au moins un segment (10.n).

12. Procédé selon la revendication 11, dans lequel les lignes de séparation (9) sont introduites par gravure laser.

13. Utilisation de la vitre (100) selon l'une des revendications 1 à 10 dans des moyens de transport pour des déplacements sur terre, dans l'air ou sur l'eau, en particulier dans des véhicules automobiles, par exemple comme pare-brise, lunette arrière, vitres latérales et/ou vitre de toit ainsi que comme pièce individuelle fonctionnelle, et comme composant intégré dans des meubles, des appareils et des bâtiments, en particulier comme chauffage électrique et de la zone non revêtue (8) comme fenêtre de communication pour la transmission de données.
